# FASCICULE DE BREVET EUROPEEN

(11) **EP 2 408 073 B1**
(45) Date de publication et mention de la délivrance du brevet: **24.08.2016**
(21) Numéro de dépôt: 11360029.0
(22) Date de dépôt: 12.07.2011
(51) Int. Cl.: H02B 1/20

(54) **Dispositif de distribution d'energie électrique avec cellules de mesure de paramètres électriques**
Elektrische Energieverteiler mit Messzellen zur Messung elektrischer Parameter.
Assembly for the distribution of electrical energy having units measuring electrical parameters.

(30) Priorité: 16.07.2010 FR 1055781
(43) Date de publication de la demande: 18.01.2012
(73) Titulaire: Hager-Electro SAS, 67210 Obernai (FR)
(72) Inventeur: Poinsignon, Jean-Marc, 57220 Fouligny (FR)
(74) Mandataire: Nuss, Laurent

(56) Documents cités:
- WO-A1-2008/065904
- FR-A1- 2 875 911
- JP-A- 2008 136 281
- US-A- 5 466 974
- US-A- 5 933 319

## Description

La présente invention consiste à équiper des installations électriques traditionnelles avec des dispositifs de distribution et de mesure électrique, du type barres de distribution alimentant des appareils électriques modulaires fixés sur des rails, lesdites barres étant dotées de cellules de mesure de manière à leur permettre d'assurer différentes fonctions qui n'étaient pas prises en charge par de tels équipements jusqu'ici. Le but est d'apporter à un électricien ou à un client non électricien des informations ou des moyens de contrôle du fonctionnement de l'installation électrique.

Ces moyens de contrôle peuvent être des moyens de mesure de courant, de tension, de température, de champs électromagnétiques, des systèmes de commutation, voire même des moyens de contrôle des systèmes de commutation,... générant des informations qui pourront être traitées ou communiquées à des unités de traitement extérieures ou propre au dispositif de distribution. L'idée qui est à la base de l'invention est de créer des installations « intelligentes », capables d'une part de fournir des informations à l'utilisateur, et d'autre part d'être gérées selon les souhaits de l'utilisateur. Le document WO 2008/065904 décrit un dispositif de distribution d'énergie avec capteurs de courant pour chaque troçon de sortie.

Ces moyens de contrôle doivent pouvoir être intégrés aussi bien dans une installation neuve que dans une installation à rénover où les équipements sont variés et physiquement inhomogènes.

Traditionnellement, des appareils supplémentaires sont ajoutés dans le tableau électrique afin d'obtenir des informations ou des moyens de contrôle du fonctionnement de l'installation électrique. Cependant, ces appareils nécessitent une architecture ainsi qu'un câblage spécifiques. En conséquence, leur intégration est difficile à mettre en oeuvre lors de rénovations, ou lors d'extensions étant donné les nombreuses modifications à apporter à l'installation, et compte tenu du fait que la constitution des armoires est variable.

Une autre solution existante consiste à proposer un dispositif de distribution et de mesure reliée à l'alimentation principale ou au support des appareils dans l'armoire, ce qui implique que lesdits appareils électriques se greffent sur une structure déjà équipée de moyens de distribution de l'alimentation et mesure de paramètres de fonctionnement. Cette solution présente de nombreux inconvénients, notamment la nécessité d'un démontage complet des appareils avant l'installation du dispositif et à chaque fois que ce dernier doit subir des modifications, par exemple lorsqu'il faut changer de place ou ajouter une cellule de mesure dans le dispositif.

L'idée de la présente invention consiste à profiter des dispositifs de distribution présents dans le tableau électrique, à savoir les barres de distribution par exemple, pour obtenir une installation « intelligente ». Ces barres ou peignes de distribution ou de pontage sont en effet des interfaces naturelles entre l'ensemble des appareils fixés sur les rails DIN formant une plateforme fixe dans l'armoire de distribution et les conducteurs, soit d'alimentation, soit de connexion, véhiculant de la puissance ou du signal. Ces barres sont amovibles sans qu'il y ait besoin de démonter les appareils sur lesquels elles sont fixées.

L'objectif de la présente invention est de mettre en place dans les armoires électriques des moyens de mesure de différents paramètres techniques, couplés éventuellement à des moyens de traitement d'informations, et des moyens de commande, adaptables à toute constitution d'armoire, notamment sans bouleverser l'installation existante, de manière simple et efficace.

A cet effet, l'invention porte sur un dispositif de distribution d'énergie qui vient se positionner sur une rangée d'appareils électriques fixes, et non pas l'inverse. Ce dispositif de distribution doit donc s'adapter à l'agencement des appareils électriques déjà en place dans l'armoire de distribution. Pour ce faire, le dispositif de distribution de l'invention est amovible et modulable par rapport à ne plateforme fixe formée de l'agencement des appareils électriques.

Il s'agit en fait d'un dispositif de distribution d'énergie de dimension modulable, employé dans une armoire de distribution de type traditionnelle, c'est à dire comportant au moins un rail pour la fixation d'appareils électriques de protection de ligne. Ce dispositif véhicule classiquement le neutre et/ou au moins une phase et est prévu pour être connecté de manière amovible à chaque appareil électrique fixé sur un rail. Il comporte à cet effet au moins un longeron conducteur équipé à intervalles régulier de zones de connexion à chaque appareil.

Selon l'invention, il est constitué de n (n≥1) tronçons élémentaires de distribution de l'alimentation électrique vers chaque appareil, chaque tronçon fonctionnant de manière autonome et pouvant accueillir au moins une cellule de mesure de paramètres électriques (tension, courant, champs électromagnétiques, ...) et/ou physiques (température,...) relatifs audit tronçon.

Le dispositif de distribution peut consister en au moins une barre, ou en au moins un fil souple rigidifié dans les zones de connexion, ou tout autre solution apte à acheminer de l'alimentation ou du signal.

De préférence, le dispositif de distribution est fixé à l'horizontale dans l'armoire électrique. Mais il est tout à fait possible qu'il soit fixé à la verticale, afin de s'adapter à la configuration existante des différents éléments intégrés dans l'armoire.

Chaque tronçon peut être destiné à un seul circuit, ou peut réaliser le lien entre deux circuits à la manière d'un cavalier par exemple.

Plus précisément, chaque cellule est localisée sur le longeron du dispositif de distribution ou au niveau de la zone de connexion à un appareil électrique.

Il peut s'agir d'une barre linéaire de type suisse, ou d'une barre de type français dotée de languettes ou de fourches de connexion. Dans ce cas, la cellule peut être localisée sur une languette ou une fourche ou encore sur une interface conductrice raccordant deux languettes ou fourches adjacentes, ou plus généralement deux zones de connexion adjacentes.

Ce dispositif de mesure peut tout aussi bien être amovible que fixe sur la barre de distribution, suivant les contraintes de procédure et de fiabilité.

Le dispositif de distribution est sécable entre chaque tronçon qui reste fonctionnel après séparation, et en-dehors des emplacements des cellules afin de ne pas les endommager.

L'objectif de cette modularité consiste à équiper le dispositif au juste nécessaire en ajustant sa longueur en fonction du nombre d'appareils de manière à ce qu'il puisse être intégré dans toute configuration d'armoire.

La division du dispositif est possible sans modifier le câblage se trouvant éventuellement à l'intérieur.

Le dispositif de distribution doit contenir une certaine souplesse pour faciliter son installation dans une rangée d'appareils. La fixation du dispositif dans l'armoire électrique entraine l'apparition de contraintes sur le dispositif. A cet effet, les zones de déformation privilégiées se trouvent en dehors des zones de mesure de manière à protéger les cellules.

L'installation du dispositif sera faite en une seule opération en changeant l'existant par un dispositif pré-équipé de cellules en situation de rénovation, ou en installant directement un dispositif pré-équipé de cellules en situation de première installation d'armoire électrique.

Le dispositif peut être pré-équipé en usine directement, ou pré-équipé par un électricien au moment du montage dans le tableau électrique. L'électricien pourra ainsi choisir les circuits nécessitant des mesures.

De préférence, une mesure globale sera effectuée au départ du dispositif de distribution, au niveau du différentiel, puis à chaque sortie du dispositif de distribution, en d'autres termes au niveau de chaque départ vers un circuit.

En pratique, chaque cellule comporte un ou plusieurs capteurs de mesure selon le besoin puisqu'il est possible de mesurer tous les paramètres électriques et/ou physiques résultant de chaque circuit.

De préférence, la cellule sera équipée d'un dispositif apte à mesurer le champ magnétique. Plusieurs solutions sont envisageables :
- Emploi d'un tore bobiné disposé autour du conducteur dont le champ magnétique est à mesurer ; la bobine placée sur le tore restitue une tension directement liée au champ magnétique local produit par le conducteur lorsque ce dernier est traversé par un courant.
- Emploi d'un guide magnétique ayant l'allure d'un tore par exemple, dans lequel une découpe radiale est réalisée afin d'y insérer un capteur de champ magnétique comme un capteur de proximité inductif de type capteur à effet Hall ; ladite découpe a pour fonction principale de concentrer le flux magnétique sur le capteur.
- Emploi d'un capteur de champ magnétique de type capteur à effet Hall positionné au plus proche du conducteur, par exemple sur le cuivre d'une barre au niveau du longeron, ou des languettes/fourches, de manière à s'affranchir au mieux du bruit parasite environnant.
- Emploi d'un relai magnétique de type Reed à la place d'un capteur à effet Hall dans les deux solutions précédentes ; ledit relai magnétique fonctionne en tout ou rien, c'est-à-dire qu'il détecte ou non la présence d'un champ magnétique.
- Emploi de deux capteurs à effet Hall, l'un d'eux étant positionné au plus proche du conducteur, l'autre étant positionné à distance de manière à créer un champ perturbateur prépondérant dans la mesure ; le résultat de la mesure est calculé par la soustraction pondérée des deux signaux des deux capteurs.

Cette liste n'est pas exhaustive.

Ces capteurs, et à fortiori les cellules, doivent de manière générale être placés à proximité du conducteur à mesurer de façon à capter son champ magnétique. L'objectif est de contrôler l'environnement autour du capteur pour éviter toute perturbation. Ce contrôle passe par la maîtrise de la géométrie, c'est-à-dire de la disposition du capteur par rapport au conducteur. Pour cela, des emplacements privilégiés pour les capteurs sont définis en fonction de plusieurs paramètres (comme les lignes de champs, la forme des zones de connexion, ...).

Dans la mesure où un courant électrique peut générer un champ magnétique, les solutions ci-dessus peuvent également servir à mesurer une intensité (I). De cette manière, un capteur de mesure peut être employé pour mesurer un ou plusieurs paramètres.

Il est possible de constater un manque de précision dans la mesure ainsi que l'apparition de bruit de mesure dû au niveau de courant, à la bande passante, aux contraintes mécaniques/thermiques, ... Il s'agit de signaux parasites venant se superposer à l'information que l'on souhaite récupérer. Ces signaux sont une gêne pour la compréhension de l'information que le signal transporte. A cet effet, pour pouvoir éliminer ou atténuer ce bruit d'origine externe, un blindage magnétique approprié sera apporté sur les tronçons mesurant un courant à partir de la mesure d'un champ magnétique.

De plus, afin d'apporter plus de précisions à la mesure, les cellules coopèrent optionnellement avec des guides magnétiques concentrant le flux magnétique (tels qu'un tore et une bobine). Le signal récupéré est ainsi plus propre.

Selon une configuration possible, le dispositif de distribution peut être équipé d'un ou de plusieurs shunts pour la mesure du courant (I) à partir d'une mesure de potentiel ou d'une différence de potentiels. Cette mesure peut être effectuée à différents emplacements, notamment au départ de la ligne en aval du différentiel, puis en amont des différents appareils, ou encore entre chaque tronçon élémentaire. La valeur du champ magnétique (B) pourra être déduite de la mesure de l'intensité (I) par shunt.

Le shunt peut être étalonné, c'est-à-dire faire abstraction des disparités résistives présentes dans la barre.

Une mesure de tension est effectuée par des moyens de contact, de type lame, ressort de contact, ou par conducteurs soudés de type fil de mesure soudé à l'emplacement désiré pour la prise de mesure.

De préférence, le dispositif de distribution comporte un capteur de température par conducteur (Phase 1, Phase 2..., Neutre) afin d'évaluer l'état d'échauffement du dispositif permettant de déceler un échauffement anormal dû à un mauvais serrage du dispositif par exemple. Cette mesure de température permet également d'apporter des corrections sur l'analyse des mesures de courant.

Il est également possible de se servir de la dérive d'un composant fonctionnel pour en déduire une température.

En conclusion, chaque cellule comporte des capteurs simples capables de mesurer différents paramètres, soit directement, soit indirectement par des lois physiques ou autres.

Le dispositif de distribution comporte des connecteurs auxquelles les capteurs amovibles sont connectés afin de transférer le signal. Ces connecteurs peuvent également assurer l'alimentation électrique des capteurs si besoin. Elle s'effectue au moyen d'une alimentation extérieure et/ou est ponctionnée sur le dispositif même puis convertie à la tension exigée par le capteur par un transformateur présent dans le dispositif ou extérieur au dispositif.

Les informations données par les capteurs sont ensuite mises en forme, soit directement par le capteur, soit par des moyens de mise en forme prévus dans la cellule, comme des moyens de filtrage par exemple.

Après, les informations sont traitées. L'idée est donc d'intégrer dans le dispositif de distribution des moyens de traitement des informations provenant des cellules.

Ces moyens de traitement peuvent être centralisés pour toute la barre en un emplacement, ou répartis sur chaque tronçon, ou dans chaque cellule.

Pour cela, des cellules hébergeant du traitement numérique avec des possibilités de multiplexage seront utilisées. Ces cellules sont programmables et configurables.

Mieux encore, des capteurs dits « intelligents », intégrant un filtre, un processeur, ... seront utilisés dans les cellules, et pourront traiter eux-mêmes leurs propres informations.

Par exemple, ces moyens de traitement peuvent consister en des moyens électroniques, de type microcontrôleur ou DSP.

Alternativement, le dispositif de distribution comporte des moyens de communication avec des composants extérieurs. En l'occurrence, il peut s'agir de composants de traitement reliés au dispositif par un fil et un connecteur, c'est-à-dire déportés, ou directement clipsés au dispositif, c'est-à-dire jointifs au dispositif. Il peut également s'agir de tout autre type de composant extérieur.

La dernière étape consiste à communiquer à l'utilisateur ces informations, de manière brute, ou sous forme plus conviviale avec des afficheurs, ou autres.

A cet effet, des indicateurs visibles et intuitifs, résultant d'au moins une mesure ou d'au moins un traitement d'information, de type LED, peuvent s'ajouter aux fonctions mises en oeuvre par le dispositif de distribution.

Les LED d'état présentent l'avantage d'identifier le bon fonctionnement de la communication, de vérifier la bonne configuration de l'appareil, ou encore de diagnostiquer certaines fonctions de l'appareil, de type disjoncteur en surcharge ou s'approchant du seuil de déclenchement thermique.

La mise en oeuvre des LED peut varier suivant leur nombre ou leur couleur, ... Tout autre moyen visuel peut remplacer les LED.

Selon une configuration possible, le dispositif de distribution comporte au moins un connecteur. Il est possible d'avoir un connecteur par tronçon. Ce moyen de communication est uniquement filaire. Mais il existe d'autres types de moyen de communication, comme ceux basés sur la radiofréquence.

Selon une possibilité, le dispositif de distribution contient au moins une interface homme-machine comportant des organes de commande de fonctions réalisées par la barre.

Plus précisément, il peut s'agir par exemple d'une fonction de commande à distance d'un circuit où l'on détecte une consommation, d'une fonction d'indication d'un défaut sur un circuit, ou encore d'une fonction d'actionnement ou de déclenchement d'un contacteur de délestage par appareil.

Plus généralement, la barre de distribution comporte des moyens de commutation de puissance, de type contacteur ou semi-conducteur, permettant d'assurer le contrôle d'une charge ou la communication d'une information.

Selon une autre possibilité, le dispositif de distribution est équipé d'au moins un bouton poussoir destiné par exemple à la réinitialisation d'un circuit ou module, ou destiné à créer une interruption sur le circuit ou module afin de lui permettre d'entrer dans une séquence de fonctionnement spécifique, ou encore destiné à autoriser ou non la fonction de délestage par appareil.

Finalement, la barre de distribution selon l'invention est « intelligente » de part sa capacité à mesurer différents paramètres, à les traiter, et à les communiquer à l'utilisateur. « L'intelligence » au sens électronique du terme, c'est-à-dire au niveau programmation et communication, peut être localisée dans la barre, ou ajoutée sur la barre par clipsage, ou encore être extérieur à la barre tel un module de traitement fixé sur un rail DIN.

Un exemple d'intégration de cellules de mesures sur une barre de distribution va à présent être décrit plus en détail, en référence aux figures suivantes :
- la figure 1 représente une barre de distribution phase-neutre avec une rangée d'appareils électriques ainsi qu'une cellule de mesure, selon une configuration possible ;
- la figure 2 montre le dessous d'une barre de distribution selon la figure 1 ;
- la figure 3 est une vue éclatée de la barre de distribution selon les figures 1 et 2 ;
- la figure 4 est une vue agrandie d'une cellule de mesure ;

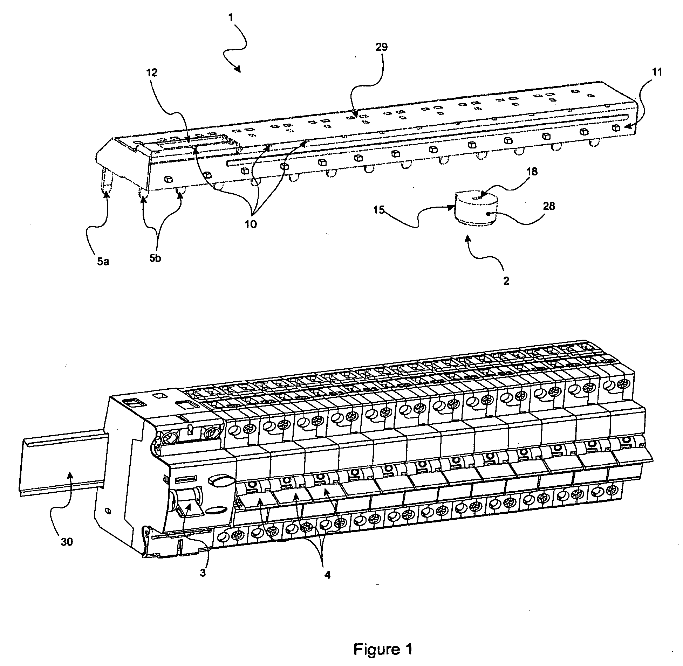

La figure 1 représente une configuration possible d'un dispositif de distribution d'énergie sous forme d'une barre (1) de distribution phase-neutre. Cette barre (1) présente des languettes de connexion au neutre (5a) et à la phase (5b). Elle est appliquée à une rangée d'appareils électriques, en l'occurrence un appareil différentiel (3) et plusieurs disjoncteurs (4) disposés sur un rail (30) équipant une armoire de distribution.

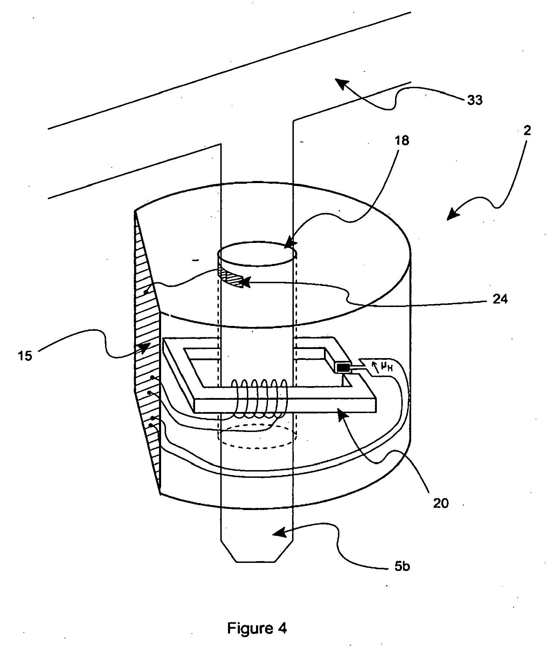

Une cellule de mesure (2) est représentée sous cette barre de distribution (1). Cette cellule (2) consiste en un volume cylindrique présentant une face arrière plane (15) et comportant un orifice (18) central débouchant apte à accueillir une languette (5b, 5a). Une enveloppe de protection (28) couvre la cellule (2) pour assurer une fonction d'isolation IP2x. La constitution interne de cette cellule (2) sera vue plus en détail dans la figure 4.

La barre de distribution (1) présente des moyens de communication avec l'utilisateur, à savoir un connecteur (12) pour une communication filaire situé à l'extrémité gauche de la barre, et une LED (10) par appareil (3, 4). Les LEDs (10) sont des indicateurs visibles et intuitifs, et permettent dans le cas présent de diagnostiquer certains états de l'appareil, du type surcharge ou proximité du seuil de déclenchement thermique pour un disjoncteur (4).

La barre de distribution (1) est également équipée d'un bouton poussoir (11) par appareil (3, 4), destiné par exemple à la réinitialisation d'un circuit ou module, ou destiné à créer une interruption sur le circuit ou module afin de lui permettre d'entrer dans une séquence de fonctionnement spécifique, ou encore destiné à autoriser ou non la fonction de délestage par appareil (3, 4).

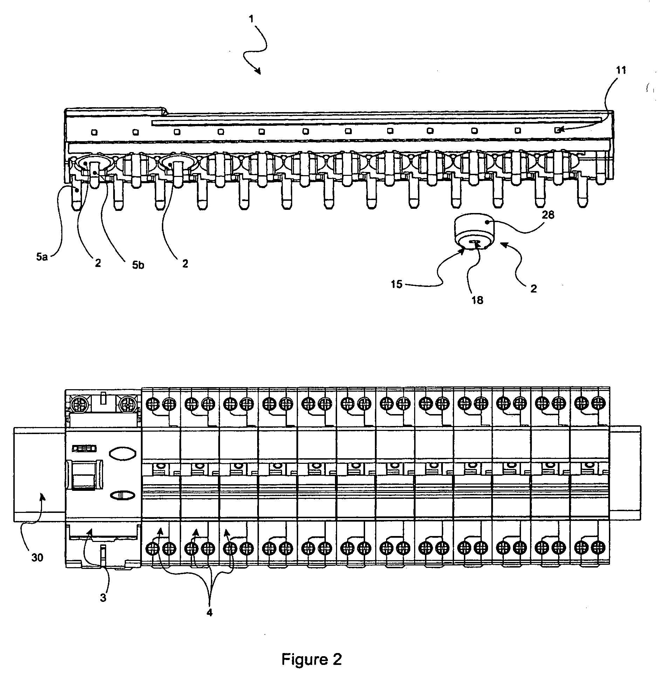

En pratique, comme cela est montré en figure 2, l'électricien emboîte chaque cellule (2) dans une languette (5b dans le cas présent) correspondant à un circuit dont l'utilisateur souhaite obtenir des informations.

En général, une mesure globale est effectuée au départ du dispositif de distribution au moyen d'une cellule (2) localisée sur la languette (5b) correspondant au module différentiel (3). Une autre mesure est faite à une ou plusieurs sortie(s) du dispositif de distribution, en d'autres termes au niveau des départs vers un circuit. Pour cela, l'électricien place une autre cellule (2) au niveau du second disjoncteur (4) par exemple.

Chaque cellule (2) est amovible, et peut ainsi être facilement retirée au moyen d'un tournevis, en l'insérant dans des orifices (29) visibles en figure 1, présents sur le dessus de la barre (1) et situés juste au-dessus de la partie supérieure des cellules (2). Il est alors possible d'extraire les cellules (2) hors des languettes (5b).

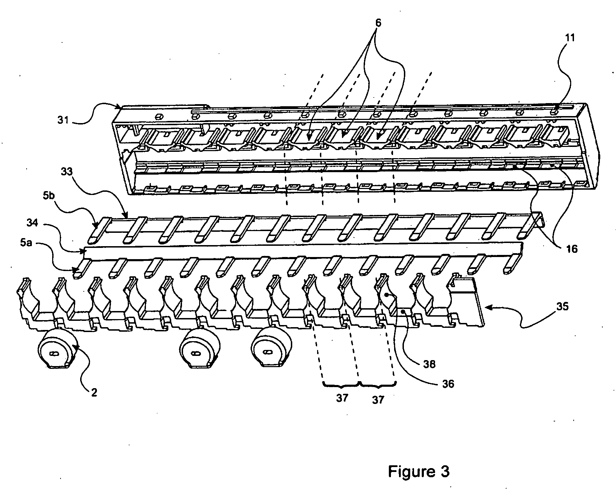

La figure 3 illustre les différents éléments composant la barre de distribution (1) selon une configuration possible.

Elle comporte tout d'abord un capot supérieur (31) sur lequel se trouvent le connecteur (11) et les LEDs (10). Ce capot (31) contient plusieurs compartiments (6). Il présente par ailleurs des moulures pour accueillir un conducteur de neutre (33) et un conducteur de phase (34), tous deux dotés de languettes (5a, 5b) de connexion aux appareils électriques (3, 4).

Une barrette (35) complète cette barre (1). Cette barrette (35) est composée de plusieurs portions (37) sécables et identiques dont la forme intérieure épouse la forme extérieure d'une cellule (2). Chaque portion (37) est composée d'une partie plane (38) délimitée par deux protubérance (36) s'étendant perpendiculairement à ladite partie plane (38). Cette barrette (36) coopère avec les conducteurs (33, 34), le tout venant se clipser dans le capot (31) pour former une barre de distribution (1). Plus précisément, chaque portion (37) de la barrette (35) coopère avec une languette (5a), une languette (5b), et un compartiment (6) du capot (31), le tout formant un tronçon élémentaire à l'intérieur duquel se trouve un espace apte à accueillir une cellule de mesure (2). Chaque cellule (2) mise en place dans la barre (1) est ainsi séparée des cellules (2) adjacentes par au moins une protubérance (36) dont la fonction est de guider les cellules (2) lors de leur insertion puis de les maintenir en position dans la barre (1).

La figure 4 illustre plus en détail un exemple possible d'une cellule de mesure (2). Cette dernière est insérée dans une languette (5b) du conducteur de phase (33) via son orifice (18) central. La dimension de l'orifice (18) est prévue pour que la languette (5b) y pénètre aisément. En l'absence de la barrette (35), la cellule (2) peut être maintenue en position de fonctionnement, soit par frottement entre la languette (5b) et la paroi de l'orifice (18), soit par des clips (non représentés).

Cette cellule (2) est équipée d'un capteur de température (24) localisé sur la surface interne de l'orifice (18) pour effectuer des mesures au plus près de la languette (5b).

Cette cellule (2) est également équipée d'un capteur à effet Hall (20) comportant une culasse magnétique en forme de C entourant la languette (5b) et coopérant avec une bobine de manière à mesurer le courant présent au niveau du circuit.

Les conducteurs soudés, à savoir les fils d'alimentation ainsi que les fils véhiculant les signaux des différents capteurs (24, 20), et plus généralement les points de contact et/ou les connecteurs d'interfaces sont reliés à la face arrière (15) de la cellule (2) jouant le rôle d'interface électrique. Cette face arrière (15) est en contact avec des moulures (16) visibles en figure 3 et présentes dans le capot (31) de la barre (1), lesdites moulures (16) pouvant être dotées d'une alimentation et d'un système de réception de signaux.

Selon une autre configuration possible, l'interface électrique peut être située sur deux côtés latéraux de la cellule (2) de manière à la clipser dans la barre (1) par un effet ressort de contact au niveau des deux côtés. Cet effet ressort peut servir à établir le contact tout en maintenant la cellule (2) en position de fonctionnement.

La présente invention n'est pas limitée aux exemples de réalisation décrits mais s'étend à toute modification et variante évidentes pour un homme du métier tout en restant dans la portée de la protection définie dans les revendications.

## Revendications

1. Dispositif de distribution d'énergie (1) de dimension modulable employé dans une armoire de distribution comportant au moins un rail (30) pour la fixation d'appareils (3, 4) électriques de protection de ligne, ledit dispositif véhiculant le neutre (33) et/ou au moins une phase (34) et étant prévu pour être connecté de manière amovible à chaque appareil (3, 4) électrique fixé sur un rail (30), comportant au moins un longeron conducteur équipé à intervalle régulier de zones de connexion (5a, 5b) à chaque appareil (3, 4), et étant constitué de n (n≥1) tronçons élémentaires de distribution de l'alimentation électrique vers chaque appareil (3, 4), chaque tronçon fonctionnant de manière autonome et pouvant accueillir au moins une cellule de mesure (2) de paramètres électriques (tension, courant, champs électromagnétiques, ...) et/ou physiques (température,...) relatifs audit tronçon, **caractérisé en ce qu'**il est intégré à une barre (1) amovible sans qu'il y ait besoin de démonter les appareils (3, 4) sur lesquels elle est fixée, ladite barre (1) étant sécable entre chaque tronçon qui reste fonctionnel après séparation.

2. Dispositif de distribution d'énergie (1) selon la revendication précédente, **caractérisé en ce que** la cellule (2) est localisée sur le longeron conducteur du dispositif de distribution.

3. Dispositif de distribution d'énergie (1) selon la revendication 1, **caractérisé en ce que** la cellule (2) est localisée au niveau de la zone de connexion (5a, 5b) à un appareil électrique (3, 4).

4. Dispositif de distribution d'énergie (1) selon la revendication 1, **caractérisé en ce que** la cellule (2) est localisée au niveau d'une interface conductrice de raccordement de deux zones de connexion adjacentes.

5. Dispositif de distribution d'énergie (1) selon l'une des revendications précédentes, **caractérisé en ce que** les zones de connexion (5a, 5b) à un appareil électrique (3, 4) ont l'allure d'une languette ou d'une fourche.

6. Dispositif de distribution d'énergie (1) selon l'une des revendications précédentes, **caractérisé en ce qu'**il est sécable entre chaque tronçon en dehors des emplacements des cellules (2).

7. Dispositif de distribution d'énergie (1) selon l'une des revendications précédentes, **caractérisé en ce que** les zones sécables entre les tronçons correspondent à des zones de concentration de contraintes.

8. Dispositif de distribution d'énergie (1) selon l'une des revendications précédentes, **caractérisé en ce que** la cellule (2) comporte un ou plusieurs capteurs (20, 24) de mesure, chaque capteur (20, 24) étant apte à mesurer un ou plusieurs paramètres.

9. Dispositif de distribution d'énergie (1) selon la revendication précédente, **caractérisé en ce que** la cellule (2) est dotée d'un dispositif (20) de mesure du champ magnétique présent au niveau d'une zone conductrice.

10. Dispositif de distribution d'énergie (1) selon la revendication 9, **caractérisé en ce que** le dispositif de mesure du champ magnétique comprend au moins un capteur (20) de champ magnétique, de type capteur à effet Hall ou bobine.

11. Dispositif de distribution d'énergie (1) selon l'une des revendications 9 ou 10, **caractérisé en ce que** le dispositif de mesure du champ magnétique comprend au moins un guide magnétique.

12. Dispositif de distribution d'énergie (1) selon l'une des revendications 8 à 11, **caractérisé en ce que** le courant est mesuré par un shunt.

13. Dispositif de distribution d'énergie (1) selon l'une des revendications 8 à 12, **caractérisé en ce qu'**une mesure de tension est effectuée par des moyens de contact, de type lame, ressort de contact, ou par conducteurs soudés de type fil de mesure soudé à l'emplacement désiré pour la prise de mesure.

14. Dispositif de distribution d'énergie (1) selon l'une des revendications 8 à 13, **caractérisé en ce qu'**il comporte un capteur de température (24) par conducteur.

15. Dispositif de distribution d'énergie (1) selon l'une des revendications 8 à 14, **caractérisé en ce qu'**il comporte des connecteurs auxquels des capteurs amovibles (20, 24) se connectent pour la transmission du signal et/ou l'alimentation.

16. Dispositif de distribution d'énergie (1) selon l'une des revendications précédentes, **caractérisé en ce qu'**il intègre des moyens de mise en forme et de traitement des informations récupérées par les cellules (2), l'intégration s'effectuant de manière centralisée pour tout le dispositif, ou de manière sectorisée par tronçon, par cellule (2), ou par capteur (20, 24).

17. Dispositif de distribution d'énergie (1) selon la revendication précédente, **caractérisé en ce que** les moyens de traitement des informations comportent des moyens électroniques, de type microcontrôleur ou DSP.

18. Dispositif de distribution d'énergie (1) selon l'une des revendications précédentes, **caractérisé en ce qu'**il comporte des moyens de communication avec des composants extérieurs.

19. Dispositif de distribution d'énergie (1) selon la revendication précédente, **caractérisé en ce qu'**il communique avec des composants de traitement extérieurs déportés ou jointifs.

20. Dispositif de distribution d'énergie (1) selon l'une des revendications 16 à 19, **caractérisé en ce que** les moyens de traitement des informations comportent des indicateurs résultant d'au moins une mesure ou d'au moins un traitement d'informations.

21. Dispositif de distribution d'énergie (1) selon l'une des revendications précédentes, **caractérisé en ce qu'**il contient au moins une interface homme-machine comportant des organes de commande de fonctions réalisées par le dispositif.

22. Dispositif de distribution d'énergie (1) selon la revendication précédente, **caractérisé en ce qu'**il comporte des moyens de commutation de puissance de type contacteur ou semi-conducteur.

23. Dispositif de distribution d'énergie (1) selon l'une des revendications précédentes, **caractérisé en ce qu'**il comporte au moins un bouton d'acquisition (11) utilisé pour des fonctions d'initialisation ou de configuration par exemple.

## Patentansprüche

1. Energieverteilungsvorrichtung (1) von modulierbarer Größe, der in einem Verteilerschrank verwendet wird, welcher mindestens eine Schiene (30) zum Befestigen elektrischer Leitungsschutzgeräte (3, 4) umfasst, wobei die Energieverteilungsvorrichtung, die den Nullleiter (33) und/oder mindestens eine Phase (34) befördert und vorgesehen ist, um abnehmbar an jedes elektrische Gerät (3, 4) angeschlossen zu werden, das auf einer Schiene (30) befestigt ist, mindestens einen leitenden Längsträger aufweist, der in regelmäßigen Abständen mit Bereichen (5a, 5b) zum Anschließen an jedes Gerät (3, 4) ausgestattet ist, und aus n (n ≥ 1) Elementarabschnitten zum Verteilen der elektrischen Energiezufuhr zu jedem Gerät (3, 4) gebildet ist, wobei jeder Abschnitt autonom funktioniert und mindestens eine Zelle (2) zur Messung von elektrischen Parametern (Spannung, Strom, elektromagnetische Felder, ...) und/oder physikalischen Parametern (Temperatur, ...) in Bezug auf den Abschnitt aufnehmen kann, **dadurch gekennzeichnet, dass** er in einer Stange (1) integriert ist, die abnehmbar ist, ohne dass es erforderlich ist, die Geräte (3, 4), auf denen sie befestigt ist, abzumontieren, wobei die Stange (1) zwischen jedem Abschnitt abtrennbar ist, der nach der Trennung funktionsfähig bleibt.

2. Energieverteilungsvorrichtung (1) nach dem vorhergehenden Anspruch, **dadurch gekennzeichnet, dass** die Zelle (2) auf dem leitenden Längsträger des Energieverteilers angeordnet ist.

3. Energieverteilungsvorrichtung (1) nach Anspruch 1, **dadurch gekennzeichnet, dass** die Zelle (2) an dem Bereich (5a, 5b) zum Anschließen an ein elektrisches Gerät (3, 4) angeordnet ist.

4. Energieverteilungsvorrichtung (1) nach Anspruch 1, **dadurch gekennzeichnet, dass** die Zelle (2) an einer leitenden Schnittstelle zum Verbinden von zwei benachbarten Bereichen zum Anschließen angeordnet ist.

5. Energieverteilungsvorrichtung (1) nach einem der vorhergehenden Ansprüche, **dadurch gekennzeichnet, dass** die Bereiche zum Anschließen (5a, 5b) an ein elektrisches Gerät (3, 4) die Gestalt einer Zunge oder einer Gabel haben.

6. Energieverteilungsvorrichtung (1) nach einem der vorhergehenden Ansprüche, **dadurch gekennzeichnet, dass** sie zwischen jedem Abschnitt außerhalb der Lage der Zellen (2) abtrennbar ist.

7. Energieverteilungsvorrichtung (1) nach einem der vorhergehenden Ansprüche, **dadurch gekennzeichnet, dass** die abtrennbaren Bereiche zwischen den Abschnitten Belastungskonzentrationsbereichen entsprechen.

8. Energieverteilungsvorrichtung (1) nach einem der vorhergehenden Ansprüche, **dadurch gekennzeichnet, dass** die Zelle (2) einen oder mehrere Messsensoren (20, 24) aufweist, wobei jeder Sensor (20, 24) geeignet ist, einen oder mehrere Parameter zu messen.

9. Energieverteilungsvorrichtung (1) nach dem vorhergehenden Anspruch, **dadurch gekennzeichnet, dass** die Zelle (2) mit einer Vorrichtung (20) zum Messen des Magnetfelds ausgestattet ist, das an einem leitenden Bereich vorhanden ist.

10. Energieverteilungsvorrichtung (1) nach Anspruch 9, **dadurch gekennzeichnet, dass** die Vorrichtung zum Messen des Magnetfelds mindestens einen Magnetfeldsensor (20) vom Typ eines Hall-Effekt-Sensors oder eines Spulensensors aufweist.

11. Energieverteilungsvorrichtung (1) nach einem der Ansprüche 9 oder 10, **dadurch gekennzeichnet, dass** die Vorrichtung zum Messen des Magnetfelds mindestens einen Magnetleiter aufweist.

12. Energieverteilungsvorrichtung (1) nach einem der Ansprüche 8 bis 11, **dadurch gekennzeichnet, dass** der Strom durch einen Shunt gemessen wird.

13. Energieverteilungsvorrichtung (1) nach einem der Ansprüche 8 bis 12, **dadurch gekennzeichnet, dass** eine Spannungsmessung durch Kontaktmittel vom Typ Blatt, Kontaktfeder oder durch verlötete Leiter vom Typ Messdraht, der an die gewünschte Stelle für die Aufnahme der Messung gelötet ist, durchgeführt wird.

14. Energieverteilungsvorrichtung (1) nach einem der Ansprüche 8 bis 13, **dadurch gekennzeichnet, dass** sie einen Temperatursensor (24) pro Leiter aufweist.

15. Energieverteilungsvorrichtung (1) nach einem der Ansprüche 8 bis 14, **dadurch gekennzeichnet, dass** sie Steckverbinder für die Signalübertragung und/oder die Stromversorgung aufweist, an die abnehmbare Sensoren (20, 24) angeschlossen werden.

16. Energieverteilungsvorrichtung (1) nach einem der vorhergehenden Ansprüche, **dadurch gekennzeichnet, dass** er Mittel zur Aufbereitung und Verarbeitung der Informationen integriert, die durch die Zellen (2) abgerufen sind, wobei die Integration auf zentralisierte Weise für den gesamten Energieverteiler oder in Sektoren geteilt pro Abschnitt, pro Zelle (2) oder pro Sensor (20, 24) durchgeführt wird.

17. Energieverteilungsvorrichtung (1) nach dem vorhergehenden Anspruch, **dadurch gekennzeichnet, dass** die die Mittel zur Verarbeitung der Informationen elektronische Mittel vom Typ Mikrocontroller oder DSP aufweisen.

18. Energieverteilungsvorrichtung (1) nach einem der vorhergehenden Ansprüche, **dadurch gekennzeichnet, dass** sie Mittel zur Kommunikation mit externen Komponenten aufweist.

19. Energieverteilungsvorrichtung (1) nach dem vorhergehenden Anspruch, **dadurch gekennzeichnet, dass** sie mit externen entfernten oder benachbarten Verarbeitungskomponenten kommuniziert.

20. Energieverteilungsvorrichtung (1) nach einem der Ansprüche 16 bis 19, **dadurch gekennzeichnet, dass** die Mittel zur Verarbeitung der Informationen Indikatoren aufweisen, die sich aus mindestens einer Messung oder mindestens einer Verarbeitung von Informationen ergeben.

21. Energieverteilungsvorrichtung (1) nach einem der vorhergehenden Ansprüche, **dadurch gekennzeichnet, dass** sie mindestens eine Mensch-Maschine-Schnittstelle aufweist, die Organe zum Steuern der Funktionen aufweist, die von dem Energieverteiler durchgeführt werden.

22. Energieverteilungsvorrichtung (1) nach dem vorhergehenden Anspruch, **dadurch gekennzeichnet, dass** sie Leistungsschaltmittel vom Typ Schütz oder Halbleiter aufweist.

23. Energieverteilungsvorrichtung (1) nach einem der vorhergehenden Ansprüche, **dadurch gekennzeichnet, dass** sie mindestens eine Erfassungstaste (11) aufweist, die für die Funktionen des Initialisierens oder Konfigurierens beispielsweise verwendet wird.

## Claims

1. Device for the distribution of energy (1) with modular dimensions used in a distribution box comprising at least one rail (30) for securing electrical devices (3, 4) for line protection, said device imparting the neutral phase (33) and/or at least one other phase (34) and being provided for connection in a removable manner to each electrical device (3, 4) fixed onto a rail (30), comprising at least one conducting stringer equipped at regular intervals with connecting zones (5a, 5b) to each device (3, 4), and being formed by n (n≥1) elementary sections for distributing electrical power to each device (3, 4), each section functioning in an autonomous manner and being able to receive at least one cell (2) for measuring electrical parameters (voltage, current, electromagnetic fields, ...) and/or physical parameters (temperature,...) relative to said section, **characterised in that** a removable bar (1) is integrated therein without there being any need to detach the devices (3, 4) onto which it is fixed, said bar (1) being divisible between each section which remains functional after separation.

2. Device for the distribution of energy (1) according to the preceding claim, **characterised in that** the cell (2) is positioned on the conducting stringer of the distribution device.

3. Device for the distribution of energy (1) according to claim 1, **characterised in that** the cell (2) is positioned at the connecting zone (5a, 5b) to an electrical device (3, 4).

4. Device for the distribution of energy (1) according to claim 1, **characterised in that** the cell (2) is positioned on a conducting interface for connecting two adjacent connecting zones.

5. Device for the distribution of energy (1) according to any one of the preceding claims, **characterised in that** the zones (5a, 5b) for connecting to an electrical device (3, 4) have the appearance of a tab or a fork.

6. Device for the distribution of energy (1) according to any one of the preceding claims, **characterised in that** it is divisible between each section outside of the sites of cells (2).

7. Device for the distribution of energy (1) according to any one of the preceding claims, **characterised in that** the divisible zones between the sections correspond to stress concentration zones.

8. Device for the distribution of energy (1) according to any one of the preceding claims, **characterised in that** the cell (2) comprises one or more measuring sensors (20, 24), each sensor (20, 24) being capable of measuring one or more parameters.

9. Device for the distribution of energy (1) according to the preceding claim, **characterised in that** the cell (2) is fitted with a device (20) for measuring the magnetic field present in a conducting zone.

10. Device for the distribution of energy (1) according to claim 9, **characterised in that** the device for measuring the magnetic field comprises at least one magnetic field sensor (20), such as a Hall or coil sensor.

11. Device for the distribution of energy (1) according to any one of claims 9 or 10, **characterised in that** the device for measuring the magnetic field comprises at least one magnetic guide.

12. Device for the distribution of energy (1) according to any one of claims 8 to 11, **characterised in that** the current is measured by a shunt.

13. Device for the distribution of energy (1) according to any one of claims 8 to 12, **characterised in that** the voltage is measured by contact means, of the strip type, contact spring, or by soldered conductors of the wire type soldered to the desired site for the measuring process.

14. Device for the distribution of energy (1) according to any one of claims 8 to 13, **characterised in that** it comprises a temperature sensor (24) for each conductor.

15. Device for the distribution of energy (1) according to any one of claims 8 to 14, **characterised in that** it comprises connectors to which removable sensors (20, 24) connect for transmitting the signal and/or power supply.

16. Device for the distribution of energy (1) according to any one of the preceding claims, **characterised in that** it integrates means for formatting and processing information captured by the cells (2), the integration being performed in a centralised manner for the whole device, or in a sectorised manner by section, by cell (2), or by sensor (20, 24).

17. Device for the distribution of energy (1) according to the preceding claim, **characterised in that** the means for processing information comprise electronic means, such as a microcontroller or DSP.

18. Device for the distribution of energy (1) according to any one of the preceding claims, **characterised in that** it comprises means for communicating with external components.

19. Device for the distribution of energy (1) according to the preceding claim, **characterised in that** it communicates with external remote or joined processing components.

20. Device for the distribution of energy (1) according to any one of claims 16 to 19, **characterised in that** the means for processing information comprise indicators resulting from at least one measurement or at least one piece of processed information.

21. Device for the distribution of energy (1) according to any one of the preceding claims, **characterised in that** it contains at least one man-machine interface comprising control members for functions performed by the device.

22. Device for the distribution of energy (1) according to the preceding claim, **characterised in that** it comprises power switching means of the contactor or semi-conductor type.

23. Device for the distribution of energy (1) according to any one of the preceding claims, **characterised in that** it comprises at least one acquisition button (11) used for functions of initialisation or configuration for example.
